# FASCICULE DE BREVET EUROPEEN

(11) **EP 2 489 460 B1**
(45) Date de publication et mention de la délivrance du brevet: **04.04.2018**
(21) Numéro de dépôt: 11192746.3
(22) Date de dépôt: 09.12.2011
(51) Int. Cl.: B23K 35/02, B23K 35/40

(54) **Procédé de fabrication de fil fourré par soudage laser avec un remplissage différentié**
Herstellungsverfahren von Seelenschweißdraht durch Laserschweißen mit einer differenzierten Drahteinlage
Method for manufacturing a cored welding wire by laser welding with differentiated filling

(30) Priorité: 15.02.2011 FR 1151232
(43) Date de publication de la demande: 22.08.2012
(73) Titulaire: AIR LIQUIDE WELDING FRANCE, 75007 Paris (FR); FRO - Air Liquide Welding Italia S.p.A., 37010 Rivoli Veronese (IT)
(72) Inventeur: Scappin, Michele, 31003 Castelfranco (IT); Ballerini, Gaia, 75010 Paris (FR)
(74) Mandataire: Knauer, Joachim

(56) Documents cités:
- EP-A1- 0 589 470
- WO-A2-2008/006057
- US-A- 4 584 169
- US-A- 4 632 882

## Description

L'invention concerne un procédé de fabrication d'un fil fourré étanche destiné au soudage, notamment d'acier à haute limite élastique (notamment mais pas exclusivement >690 N /mm²), dans lequel le fil est soudé par faisceau laser, après son remplissage des éléments de remplissage formant le flux interne du fil fourré, lesquels éléments de remplissage sont disposés en plusieurs couches superposées l'une à l'autre, l'une des couches contenant des éléments non métalliques et l'autre des couches contenant essentiellement des éléments métalliques.

Les fils fourrés sont utilisés dans certains procédés de soudage, notamment à l'arc, par exemple en soudage MIG/MAG ou en soudage à l'arc submergé.

Un fil fourré est habituellement constitué d'une enveloppe externe, encore appelée feuillard, formée d'une bande métallique mise sous forme tubulaire, et d'un flux de interne formé d'éléments de remplissage, tels des poudres ou des granulés.

Un tel fil fourré est notamment décrit par les documents US-A-6787736 ou FR-A-2766399.

La fabrication d'un fil fourré peut être réalisée selon plusieurs méthodes différentes connues présentant chacune des avantages et des inconvénients.

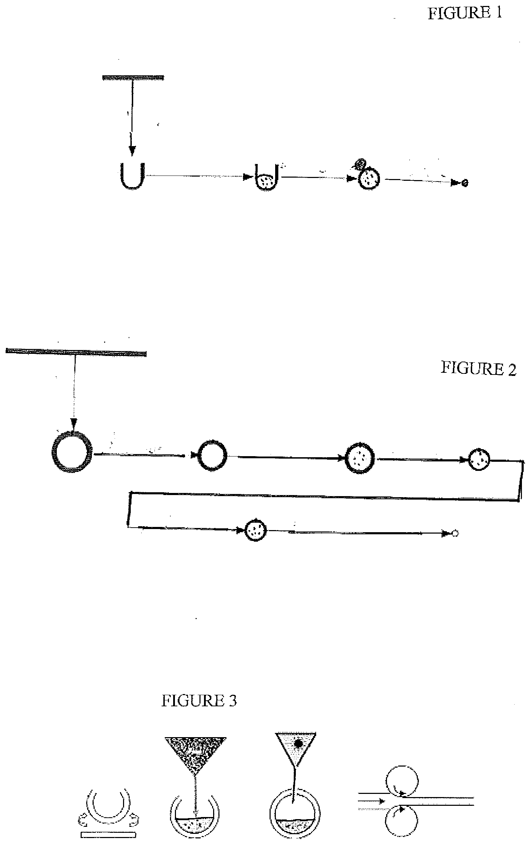

Selon une première méthode connue schématisée en Figure 1, on part d'une bande métallique ou « feuillard », qui constitue l'enveloppe externe du fil, qui est progressivement pliée par des galets formeurs ou analogue et remplie de matières premières, c'est-à-dire de flux de remplissage contenant des éléments métalliques et éventuellement non métalliques.

Plus précisément, une feuille ou bande métallique est d'abord laminée à froid jusqu'à de relativement petites dimensions, typiquement de 9 à 30 mm de largeur et de 0,4 à 1,5 mm d'épaisseur, puis mise en forme de « U » par rapprochement l'un vers l'autre de ses deux bords longitudinaux. Après formage en « U », on y introduit un mélange homogène des diverses matières premières constituant le flux interne, puis on poursuit le formage pour aboutir à une forme tubulaire en « O » non scellée, laquelle est ensuite tréfilée jusqu'au diamètre d'utilisation désiré, par exemple de 0,8 à 4 mm de diamètre.
Dans ce cas, les bords longitudinaux du tube formant le fil ne sont pas soudés et donc le fil n'est pas étanche.

Cette première méthode est relativement simple à mettre en oeuvre et permet de produire des fils avec une composition interne très homogène.

Toutefois, les fils fourrés ainsi obtenus sont sensibles à la reprise d'humidité puisque n'étant pas étanches, de la vapeur d'eau peut pénétrer à l'intérieur du fil durant son stockage, ce qui peut conduire à des niveaux d'hydrogène diffusible trop élevés et donc non acceptables dans les cordons de soudure obtenus par fusion de ces fils.

Par ailleurs, selon une deuxième méthode connue schématisée en Figure 2 et rappelée par les documents EP-A-847831 ou JP-A-58148096, on produit d'abord en continu, un fil tubulaire d'environ 10 à 25 mm de diamètre à partir d'une bande ou feuillard métallique, typiquement d'épaisseur de 1,5 à 3,5 mm et laminé à chaud, mis en forme de O, puis soudé par un procédé de soudage à haute fréquence et enfin éventuellement laminé en ligne jusqu'à un diamètre typiquement de l'ordre de 10 à 15 mm. Un recuit d'adoucissement peut être effectué et le tube est ensuite tréfilé jusqu'au diamètre de remplissage désiré.

Dans ce cas, le remplissage avec les matières premières, c'est-à-dire le flux interne, n'est effectué qu'après soudage du tube vide. Il est généralement réalisé par vibration. Le tube rempli, outre les opérations de tréfilages susmentionnées jusqu'au diamètre d'utilisation désiré, par exemple de 0,8 à 5 mm de diamètre, subit également des étapes de traitement thermique de recristallisation et de nettoiement chimique ou électrochimique.

Optionnellement, un revêtement à base de cuivre, nickel, laiton ou autre peut être réalisé sur la surface extérieure du fil.

Cette technologie est plus complexe à mettre en oeuvre mais permet de produire des fils fourrés étanches, voire revêtus en surface. Ces fils fourrés sont donc totalement insensibles à la reprise en humidité et conduisent à des niveaux d'hydrogène diffusible bas dans le métal déposé, c'est-à-dire typiquement de l'ordre de 1 à 5 ml/100g de métal déposé. En effet, durant le recuit de recristallisation, le tube devient perméable à l'hydrogène, qui s'échappe à travers l'enveloppe tubulaire. Apres refroidissement, le tube redevient étanche et empêche donc l'hydrogène de rentrer à l'intérieur et d'affecter les matières premières, c'est-à-dire le flux, qui s'y trouve.

De même, sous l'effet de la pression et de la température, l'eau réagit à l'intérieur du tube avec les poudres qui s'y trouvent. De l'hydrogène (H) est généré lequel diffuse facilement dans le tube du fait de la petite taille de la molécule d'hydrogène et de la température qui y règne. Par ailleurs, l'eau présente à l'extérieur du tube sous forme de molécules de H₂O, ne diffuse pas dans le métal donc ne peut pas entrer dans le tube.

L'inconvénient de la fabrication du fil fourré tubulaire est le risque de ségrégation des matières premières, en effet si la granulométrie et/ou la granulation des matières premières n'est pas optimisée, on risque d'avoir une distribution non homogène du flux dans le tube

Une troisième méthode connue combine les avantages des deux méthodes de fabrication précédentes et permet de produire des fils fourrés remplis en ligne, c'est-à-dire de manière continue avec fil se déplaçant continuellement en étant entraînés par des galets motorisés, à partir d'un feuillard et de les souder, également en ligne, seulement après remplissage par du flux.

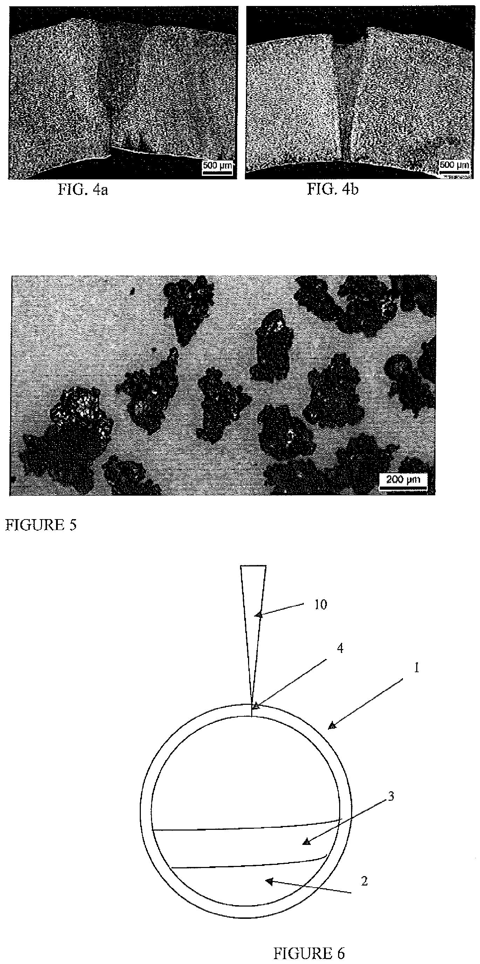

Dans cette méthode représentée en Figure 3, le fil est produit à partir d'un feuillard laminé que l'on forme d'abord en « U ». Ensuite, le tube formé en U est rempli avec un mélange homogène de différentes matières premières et on poursuit le formage pour aboutir à une forme de O. Le tube est alors soudé en ligne, par exemple avec laser en pénétration partielle (Fig. 4a) ou totale (Fig. 4b), de manière à garantir l'étanchéité. Par la suite, le tube est tréfilé jusqu'à un diamètre intermédiaire où il subi un traitement thermique et il est enfin réduit à son diamètre final d'utilisation.

Une telle méthode est notamment décrite par les documents US-A-4,673,121, GB-A-1199736, JP-A-56148494, WO-A-2010102318. Plus particulièrement, les documents WO-A-2008006057, EP-A-0589470, US-A-4,584,169 ou US-A-4,632,882 décrivent un procédé de fabrication d'un fil fourré à partir d'une bande métallique mise en forme de U dans laquelle sont déposées plusieurs couches successives d'éléments de remplissage. La bande est ensuite formée en O et ses deux bords longitudinaux sont soudés.

Toutefois, dans le document WO-A-2008006057 la nature précise des éléments de remplissage n'est pas divulguée.

Par ailleurs, dans les documents EP-A-0589470, US-A-4,584,169 ou US-A-4,632,882, la fermeture de la bande formée en O est réalisée par des procédés de soudage par courant haute fréquence, donc les problèmes rencontrés lors d'un soudage par faisceau laser ne se posent pas.

Au final, ces différentes méthodes ne sont pas idéales et présentent des inconvénients plus ou moins importants.

Ainsi, la production par laser ou par faisceau électronique, des fils fourrés engendre un risque de fusion ou de modification thermique et chimique du mélange contenu dans le tube. En effet, lorsque le faisceau laser vient impacter les bords longitudinaux du feuillard métallique pour les souder l'un avec l'autre, à pénétration totale ou partielle, il y a toujours un risque que le faisceau laser passe entre les deux bords longitudinaux du feuillard et aille impacter les matières premières contenue dans le tube, par exemple en cas de surpuissance ponctuelle du générateur laser conduisant à une sur-pénétration de soudage et/ou en cas de jeu ponctuel excessif entre les bords à souder.

Le faisceau laser va alors entrer en contact avec le flux et engendrer une fusion des matières premières du flux, donc à leur modification thermique et/ou chimique et à la formation de conglomérats durs, tel que des amas durs en forme de sphères, d'aiguilles ou autres, tels ceux montrés en Figure 5 par exemple, formés de particules de composition mixte, à savoir métallique et non métallique, de dimensions variables comprises entre quelque micron (µm) et quelques millimètres (mm) dans les cas les plus défavorables.

Or, les amas ou conglomérats durs ainsi formés engendrent des problèmes :
- soit pendant la phase de laminage et tréfilage du tube car ils peuvent déchirer le feuillard, par exemple si la dimension de l'amas dur est supérieure au diamètre interne du tube ;
- soit pendant l'utilisation du fil car un fil fourré contenant des conglomérats durs et de grandes dimensions ne fond pas de manière uniforme et peut générer des défauts dans la soudure : manque de matière, composition du métal déposé non homogène, variation incontrôlée des paramètres de soudage...

De plus, les poudres peuvent être également modifiées d'un point de vue chimique par la chaleur dégagée par le faisceau laser conduisant à des variations indésirables de leurs propriétés en soudage.

Pour tenter de résoudre ce problème, le document EP-1820599 a proposé d'opérer une rotation d'environ 90° du fil après remplissage et avant soudage. Ce procédé bien qu'efficace, engendre une complexification des lignes de production et est donc délicat à mettre en oeuvre au plan industriel, notamment du fait de la torsion de 90° appliquée au fil.

Par ailleurs, le document EP-A-1207002 propose quant à lui de diriger le faisceau pour qu'il vienne frapper le plan de joint selon un angle inférieur à 15° par rapport à l'axe du tube à souder. Ce procédé engendre également une complexification des lignes de production et est aussi délicat à mettre en oeuvre au plan industriel car un contrôle précis du point d'impact du faisceau est difficile compte tenu de la très faible épaisseur du feuillard, qui est de l'ordre de 1 mm, et des fluctuations ou vibrations parasites inévitables du feuillard sur les lignes de production.

Le but de la présente invention est donc de résoudre les problèmes susmentionnés, c'est-à-dire de proposer une méthode de fabrication de fils fourrés soudés et étanches, donc non ou très peu sensibles à la reprise en humidité, qui soit simple à mettre en oeuvre et permette d'éviter la formation d'amas ou conglomérats durs dans le flux interne, même lorsque le faisceau laser vient impacter de manière inopinée le flux interne, de manière à éviter ou minimiser les incidents lors de leur tréfilage subséquents, notamment les ruptures ou déchirements.

La solution est un procédé de fabrication d'un fil fourré à partir d'une bande métallique et d'éléments de remplissage, comprenant les étapes de :
a) amener une bande métallique ayant deux bords longitudinaux parallèles,
b) conformer la bande métallique en une gouttière (section en « U ») par rapprochement de ses bords longitudinaux,
c) remplir la gouttière obtenue à l'étape b) d'éléments de remplissage,
d) conformer la gouttière remplie d'éléments de remplissage obtenue à l'étape c) en un pré-fil de forme tubulaire (section en « O ») par rapprochement de ses bords longitudinaux jusqu'au contact ou quasi-contact l'un de l'autre, et
e) souder par faisceau laser, les deux bords longitudinaux du pré-fil de l'étape d) pour obtenir un fil soudé contenant des éléments de remplissage,
caractérisé en ce qu'à l'étape c), on procède selon les sous étapes successives de :
i) introduire dans la gouttière des premiers éléments de remplissage contenant des éléments métalliques de manière à former une sous-couche contenant lesdits éléments métalliques,
ii) déposer au dessus de la sous-couche contenant lesdits éléments métalliques, au moins une couche protectrice de seconds éléments de remplissage contenant essentiellement des éléments non métalliques.

Selon le cas, le procédé de fabrication de l'invention peut comprendre l'une ou plusieurs des caractéristiques suivantes :
- les premiers éléments de remplissage contiennent uniquement des éléments métalliques ou sont formés d'un mélange d'éléments métalliques et d'éléments non métalliques.
- la quantité d'éléments non métalliques de la couche protectrice de seconds éléments de remplissage représente au moins 90%, préférablement au moins 95%, en masse de la totalité des seconds éléments de remplissage de ladite couche protectrice.
- la quantité d'éléments non métalliques de la couche protectrice de seconds éléments de remplissage représente plus de 98% en masse de la totalité des seconds éléments de remplissage de ladite couche protectrice.
- la quantité d'éléments non métalliques de la couche protectrice de seconds éléments de remplissage représente plus de 99% à 100% en masse de la totalité des seconds éléments de remplissage de ladite couche protectrice.
- les seconds éléments de remplissage contiennent uniquement des éléments non métalliques.
- les éléments métalliques formant les premiers éléments de remplissage sont choisis parmi les métaux élémentaires, de préférence choisis parmi Ti, Ni, Fe, Si Mn, Cr, Cu, V, Nb, Mo, B, W et Co, ou les ferro-alliages, pour apporter ces mêmes éléments, et éventuellement du bore, du graphite ou de l'azote.
- les éléments non métalliques formant les seconds éléments de remplissage sont choisis parmi par exemple TiO₂, Al₂O₃, SiO₂, MgO, KAlSi₃O₈, CaF₂, Na₂SO₄, CaCO_{3...}
- les éléments non métalliques forment une couche protectrice continue au dessus la sous-couche contenant les éléments métalliques, de préférence une couche ayant une épaisseur comprise entre 0.1 mm et 10 mm, de préférence comprise entre 0.2 mm et 6 mm.
- la quantité massique de la couche protectrice supérieure d'éléments non métalliques représente de 25% à 85% de la totalité des éléments de remplissage lorsque le fil contient du laitier, ou moins de 10 % de la totalité des éléments de remplissage lorsque le fil est de type sans laitier.
- les bords longitudinaux de la bande métallique sont chanfreinés et comportent un angle de chanfreinage inférieur à 73°, de manière que les bords de la bande métallique soient parfaitement en contact entre eux et parallèles quand le tube est plié en « O ».
- l'angle de chanfreinage est inférieur ou égal à β tel que Tan(β) = 3.14, et donc un angle inclus entre environ 0 et 72°,33".
- on assure le contact entre des bords longitudinaux avec un système de galets.
- après remplissage et conformage de l'étape d) le diamètre externe du tube est compris entre 5 mm et 25 mm, c'est-à-dire après sa mise en forme en « O ».
- les étapes a) à e) sont réalisées de manière progressive et continue, la bande métallique étant animée d'un mouvement de translation.
- le fil soudé obtenu à l'étape e) subit une ou plusieurs étapes supplémentaires f) choisies par les étapes de tréfilage, de laminage, de recuit, de revêtement surfacique, de nettoyage mécanique ou chimique.
- la bande métallique constituant l'enveloppe du fil peut être en acier C-Mn, acier inoxydable, aciers alliés que ce soit aciers faiblement alliés (<5% en poids), aciers fortement alliés (>5% en poids) ou en alliage de nickel du type Inconel.
- la pénétration de la soudure de l'étape e) est comprise entre 40% et 100% de l'épaisseur de la bande métallique, de préférence l'épaisseur de la bande métallique est inférieure à 4,5 mm.
- le faisceau laser vient frapper le pré-tube selon un angle (γ) compris entre 35 et 90° par rapport à l'axe longitudinal du pré-tube, de préférence compris entre 40 et 90°.
- le fil soudé obtenu à l'étape e) ou à l'issue d'au moins une étape f) est un fil fourré étanche comprenant une enveloppe métallique externe soudée et un flux interne formé d'éléments de remplissage.

Par ailleurs, l'invention porte aussi sur un fil fourré étanche comprenant une enveloppe métallique externe soudée, en acier C-Mn par exemple, et un flux interne formé d'éléments de remplissage obtenu par un procédé de fabrication selon l'invention, caractérisé en ce que le flux interne comprend au moins deux couche d'éléments de remplissage superposées l'une à l'autre, l'une des couches contenant exclusivement des éléments non métalliques et l'autre couche contenant des éléments métalliques.

De préférence, le fil a un diamètre final, c'est-à-dire après tréfilage, laminage ou similaire, compris entre 0,8 et 5 mm de préférence de 1,2 à 4 mm environ.

L'invention va maintenant être mieux comprise grâce à la description détaillée suivante faite en références aux Figures annexées parmi lesquels :
- les Figures 1 à 3 représentent des schémas illustratifs des trois méthodes de fabrication de fils fourrés qui sont connues de l'état de la technique,
- les Figures 4a et 4b représentent la section d'un feuillard formé en « O » soudé à pénétration partielle avant et après tréfilage, respectivement,
- la Figure 5 montre des amas durs apparus dans un fil après qu'un faisceau laser soit venu frapper et fondre les éléments de remplissage contenus dans le fil considéré,
- la Figure 6 schématise une vue en coupe d'un fil fourré en cours de fabrication avec le procédé selon l'invention,
- la Figure 7 schématise le principe du procédé de fabrication de l'invention et
- la Figure 8 représente un schéma (vue en section) du chanfreinage des bords du feuillard.

Comme expliqué ci-avant, dans le cadre de la présente invention, il est proposé un procédé de fabrication de fil fourré pour le soudage à l'arc notamment, par exemple le soudage MIG/MAG, le soudage hybride laser-arc, le soudage TIG avec apport de fil, ou encore le soudage à l'arc submergé, ne contenant pas ou peu de conglomérats durs susceptibles de s'être formés de manière inopinée et non désirée dans le flux interne du fil fourré pendant le soudage par laser des bords longitudinaux du feuillard qui forme l'enveloppe externe dudit fil fourré.

De façon générale, selon l'invention, lors de la fabrication avec soudage par faisceau laser des bords du feuillards, d'un fil fourré contenant soit des éléments métalliques, tels des métaux élémentaires ou des ferro-alliages métalliques, que des éléments non métalliques, par exemple des éléments formateurs de laitier par exemple les oxydes et les feldspaths de type TiO₂, Al₂O₃, SiO₂, MgO, KAlSi₃O₈..., ou des éléments ionisants sous forme de carbonates, de fluorures, de sulfates ou de silicates, par exemple CaF₂, Na₂SO4, CaCO₃... on opère une protection des éléments métalliques fragiles, c'est-à-dire susceptibles d'être dégradés et fondus par le faisceau laser de manière à minimiser soit la formation de conglomérats durs, soit la dimension des ces derniers dans le cas de leur formation intempestive.

Pour ce faire, toujours selon l'invention, on réalise une protection des éléments métalliques fragiles et sensibles au faisceau laser par une couche protectrice formée d'éléments non ou moins sensibles et moins fragiles.

En effet, les éléments métalliques présents dans le mélange homogène utilisée pour produire les fils fourrés sont habituellement plus sensibles à l'interaction avec le laser que les éléments non métalliques et, de ce fait, les conglomérats durs de formes les plus irrégulières et de dimensions les plus grandes sont composée principalement de matières premières métalliques fondues, tel que montré en Figure 5.

Partant de là, la solution proposée par l'invention repose essentiellement sur le fait d'opérer un remplissage du feuillard 1 avant soudage en au moins deux étapes, comme illustré sur la Figure 6.

Dans un premier temps, le feuillard 1 mis sous forme de gouttière, c'est-à-dire en forme de U comme sur les Figures 1 et 3, est rempli par les matières premières les plus sensibles à la radiation laser, tel que les éléments métalliques ou un mélange d'éléments métalliques et non métalliques, de manière à constituer au moins une sous-couche 2 dans le fond de la gouttière (en U).

Dans un deuxième temps, des matières premières non métalliques sont distribuées en une (ou plusieurs couches) couche protectrice 3 superficielle venant se superposer à la sous-couche 2. Cette couche protectrice supérieure forme une barrière mécanique suffisamment épaisse et continue sur toute la longueur du tube permettant de protéger la sous-couche métallique 2.

Le feuillard est alors conformé en un pré-tube (forme en O non soudé), c'est-à-dire un cylindre métallique dont les deux bords longitudinaux sont mis en contact ou quasi-contact l'un de l'autre, puis soudés ensemble par faisceau laser 10 de sorte de constituer un tube 1 avec au moins deux couches 2, 3 interne.

Ainsi, si le faisceau laser 10 pénètre inopinément dans le pré-tube, pendant le soudage dudit pré-tube, alors celui-ci vient frapper les éléments non métalliques résistants de la couche superficielle protectrice 3 et non pas les éléments métalliques fusibles qui se trouvent dans la sous-couche 2 en fond de tube 1. Ces derniers 2 sont donc protégés et des conglomérats durs ne peuvent se former intempestivement.

Le nombre de couches d'éléments de remplissage 2, 3 doit être au moins égal à deux mais le procédé peut être appliqué pour un nombre supérieur de couches, avec la condition qu'au moins la couche supérieure, c'est-à-dire la couche 3 la plus proche de la zone d'interaction 4 entre laser et feuillard, soit composée de matières premières non métalliques, c'est-à-dire moins ou non sensibles au faisceau laser 10 et donc non susceptibles de fondre et de former des amas durs nuisibles.

Le feuillard constituant l'enveloppe externe tubulaire 1 du fil fourré est typiquement formé d'un acier carbone manganèse (C-Mn) non allié ou faiblement allié, ou en acier inox, ou en Inconel..., c'est-à-dire contenant moins de 5% de métaux d'alliage, lequel est laminé à chaud ou à froid, et contenant outre les éléments Fe, C et Mn, éventuellement d'autres éléments, par exemple Si, P, Cr, Ni, Cu...

Grâce à l'invention, lorsqu'on opère le soudage par laser du tube 1, le faisceau laser ou ses réflexions peuvent entrer en contact avec la couche protectrice supérieure 3 formée de matières premières non métalliques. Il y sera absorbé par les éléments non métalliques de cette couche 3, ce qui réduit le risque de fusion des matières premières métalliques qui se trouvent dans la sous-couche 2 la plus éloignée de la zone d'interaction 4 entre le feuillard 1 et le laser 10.

De cette manière, même s'il y a formation de conglomérats durs suite à l'interaction entre le laser et les matières premières dans le tube, leur proportions, leurs dimensions et leurs géométries seront limitées et donc n'impacteront pas négativement ou alors seulement très peu le procédé global de fabrication du fil fourré et n'engendreront pas de déchirement ou de rupture du fil lors d'étapes ultérieures de tréfilage ou de laminage notamment.

Avantageusement, la couche protectrice 3 est formée uniquement d'éléments ou matières non métalliques.

Dans le cadre de l'invention, la couche protectrice 3 peut aussi être formée d'un mélange d'éléments métalliques et d'éléments non métalliques. Dans ce cas, ce mélange contient avantageusement une très forte majorité d'éléments non métalliques, c'est-à-dire qu'elle est formée essentiellement d'éléments non métalliques. De préférence, la quantité d'éléments non métalliques de ce mélange représente au moins 90%, préférablement au moins 95%, en masse de la totalité des seconds éléments de remplissage de la couche protectrice 3. Idéalement de 98 à 100% en masse de ladite couche.

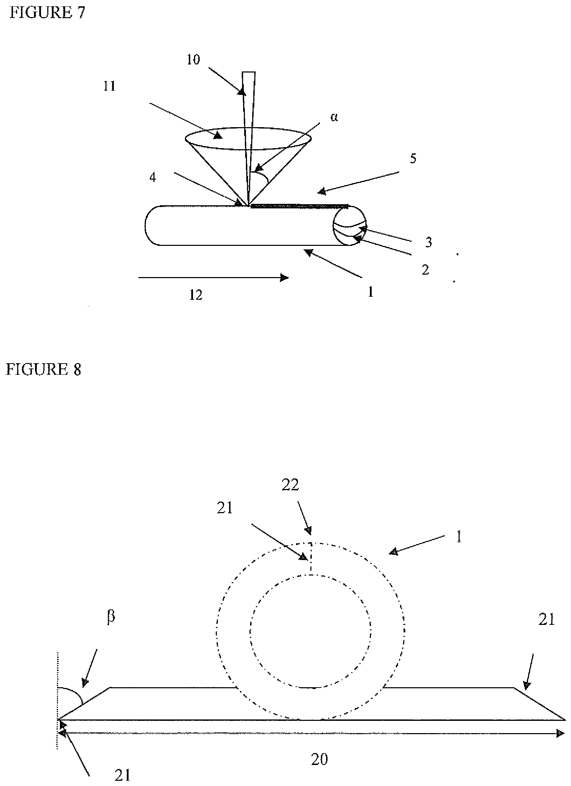

La Figure 7 est une représentation schématique générale des étapes principales du procédé de fabrication d'un fil fourré 1 selon l'invention, à partir d'une bande métallique constituant l'enveloppe externe du fil 1 et d'éléments de remplissage constituant le flux interne dudit fil 1.

Comme on le voit, une bande métallique ou feuillard, par exemple en acier C-Mn, de plusieurs dizaines, voire centaines de mètres de longueur, ayant deux bords longitudinaux parallèles l'un à l'autre est convoyée par des galets motorisés (non schématisés) dans le sens de la flèche 12 qui représente à la fois la direction de déplacement du feuillard et le sens de soudage.

La bande est déplacée tout en étant conformée de manière continue pour adopter progressivement et successivement une forme de gouttière, c'est-à-dire de section en U, par rapprochement de ses bords longitudinaux, au moyen de galets presseurs (non montrés) ou analogues, puis une forme en O, c'est-à-dire un pré-tube 1 de section circulaire ouverte également au moyen de galets presseurs ou analogues, avant d'être soudée par le faisceau laser 10 qui permet de former un joint longitudinal 5 sur la surface supérieure du pré-tube 1.

Le remplissage de la gouttière de section en U par les éléments de remplissage se fait d'abord par introduction dans la gouttière en U de premiers éléments de remplissage contenant des éléments métalliques de manière à former une (ou plusieurs) sous-couche 2 contenant lesdits éléments métalliques, puis par dépôt au dessus de la sous-couche 2 contenant lesdits éléments métalliques, d'une (ou plusieurs) couche protectrice de seconds éléments de remplissage contenant des éléments non métalliques, comme expliqué ci-avant en rapport avec la Figure 6. Dans le cas présent, la couche protectrice de seconds éléments de remplissage contient uniquement (i.e. 100% en masse) des éléments non métalliques,

Le taux de remplissage du tube est inférieur à 50%, de préférence entre 8 et 45% en masse par rapport à la masse du fil.

Selon l'invention, le remplissage de la gouttière en U avec les éléments du flux se fait donc juste avant rapprochement des bords longitudinaux de la bande métallique jusqu'à leur contact ou quasi-contact en formant ainsi un pré-tube non soudé et leur soudage subséquent par le faisceau laser 10 qui vient impacter le plan de joint du pré-tube, c'est-à-dire la zone d'interaction laser/feuillard 4, de manière à former le joint 5 qui rend le tube 1 étanche.

Il est à noter que la quantité massique de la couche supérieure 3 d'éléments non métalliques comprenant entre 25% et 85% de la totalité des matières premières pour les fils avec laitier interne ou, selon le cas, moins de 10 % d'éléments non métalliques par rapport à la totalité des matières premières contenues dans le flux pour les fils sans laitier.

La source laser utilisée pour générer le faisceau 10 peut être une source laser de type CO₂, YAG (i.e. Nd:YAG, Yb:YAG, Er:YAG...), à diodes, à disque ou à fibre (Yb) de puissance comprise entre 500 W et 10 kW, de préférence 2 kW et 8 kW.

Par ailleurs, la tête laser utilisée est une tête classique apte à et conçue pour permettre de distribuer le faisceau soit verticalement comme montré en Figure 6, soit selon un angle α comme illustré en Figure 7.

Avantageusement, le faisceau laser 10 a une inclinaison α comprise entre 0 et 55°, typiquement 0° et 50° (par exemple 45° sur la Figure 7), par rapport à la verticale au joint 5 de soudage et donc aussi l'axe du pré-tube 1, et il est donc contenu dans l'angle solide défini au tour de l'axe vertical à l'axe longitudinal du tube 1, d'ouverture maximale de 2π*(1-cos(α)) sr et précisément de 0.187π sr (stéradians) avec α = 50°, comme illustré par le cône 11 en Figure 7. Dit autrement, le faisceau a une inclinaison γ comprise entre 40° et 90° par rapport à l'axe du pré-tube 1.

Par ailleurs, comme schématisé en Figure 8, les bords longitudinaux 21 de la bande métallique 20 sont chanfreinés et comportent un angle P de chanfreinage inférieur à 73°, de manière que les bords 21 de la bande métallique 20 soient parfaitement en contact entre eux et parallèles (en 22) quand le pré-tube 1 est plié en « O ». Le contact entre des bords longitudinaux 21, l'un avec l'autre, est obtenu par avec un système de galets ou analogue venant appuyer sur la bande métallique 20 de manière à lui conférer progressivement une forme en U puis en O.

Grâce au procédé de l'invention, la vitesse de soudage selon l'épaisseur et la composition du feuillard, est comprise entre 1 et 40 m/min, de préférence d'au moins 4 m/min mais typiquement inférieure à 35 m/min.

Le soudage se fait en pénétration totale ou partielle, c'est-à-dire que la pénétration de la soudure réalisée au travers du feuillard s'étendu sur une profondeur comprise entre 40% et 100% de l'épaisseur dudit feuillard, sachant que l'épaisseur du feuillard est typiquement inférieure à 4,5 mm à l'endroit où est opéré son soudage par laser 10, typiquement entre 1,5 et et 4 mm.

Une fois rendu étanche par soudage, le tube 1 peut être encore laminé et/ou tréfilé jusqu'à son diamètre final, typiquement entre 0,8 et 5 mm environ.

Il peut aussi subir des opérations de traitement de surface, tel un revêtement ou placage par du cuivre, du nickel ou analogue qui permettent notamment d'améliorer son comportement en soudage à l'arc.

Les fils fourrés obtenus grâce au procédé de l'invention présentent les avantages, lors de leur utilisation en soudage, notamment à l'arc, de :
- fondre de manière uniforme et donc de ne pas générer de défauts dans la soudure.
- conduire à une faible proportion d'hydrogène diffusible.
- d'être particulièrement bien adaptés au soudage des aciers a haute limite élastique, notamment d'au moins 690 MPa, dans les applications (structuraux, transports, systèmes de soulèvements ....).
- réduire la possibilité de porosités et défauts de soudage grâce à l'élimination de la reprise d'humidité des poudres internes au fils, cela dans toutes les applications dans un environnement humide et/ou avec mis en oeuvre d'un procédé de soudage à l'arc submergé.
- contrôle plus facile du remplissage du fil.
- possibilité de réduire ou d'éliminer les liants, la phase d'agglomération du flux et la phase de remplissage au dehors de la ligne.
- possibilités de revêtements superficiels avec avantages d'un point de vue résistance à la corrosion, facilitation de la prise de courent dans le tube contact, réduction de la consomption des tubes de contacts et de les lignes de guidage fil.

## Revendications

1. Procédé de fabrication d'un fil fourré étanche à partir d'une bande métallique et d'éléments de remplissage, comprenant les étapes de :
a) amener une bande métallique ayant deux bords longitudinaux parallèles,
b) conformer la bande métallique en une gouttière (section en « U ») par rapprochement de ses bords longitudinaux,
c) remplir la gouttière obtenue à l'étape b) d'éléments de remplissage,
d) conformer la gouttière remplie d'éléments de remplissage obtenue à l'étape c) en un pré-fil de forme tubulaire (section en « O ») par rapprochement de ses bords longitudinaux jusqu'au contact ou quasi-contact l'un de l'autre, et
e) souder par faisceau laser, les deux bords longitudinaux du pré-fil de l'étape d) pour obtenir un fil soudé étanche contenant des éléments de remplissage,
**caractérisé en ce qu'**à l'étape c), on procède selon les sous étapes successives de :
i) introduire dans la gouttière des premiers éléments de remplissage contenant des éléments métalliques de manière à former une sous-couche contenant lesdits éléments métalliques,
ii) déposer au dessus de la sous-couche contenant lesdits éléments métalliques, au moins une couche protectrice de seconds éléments de remplissage contenant essentiellement des éléments non métalliques.

2. Procédé selon la revendication précédente, **caractérisé en ce que** la quantité d'éléments non métalliques de la couche protectrice de seconds éléments de remplissage représente au moins 90%, préférablement au moins 95%, en masse de la totalité des seconds éléments de remplissage de ladite couche protectrice.

3. Procédé selon l'une des revendications précédentes, **caractérisé en ce que** les premiers éléments de remplissage contiennent uniquement des éléments métalliques ou sont formés d'un mélange d'éléments métalliques et d'éléments non métalliques.

4. Procédé selon l'une des revendications précédentes, **caractérisé en ce que** les seconds éléments de remplissage contiennent uniquement des éléments non métalliques.

5. Procédé selon l'une des revendications précédentes, **caractérisé en ce que** les éléments métalliques formant les premiers éléments de remplissage sont choisis parmi les métaux élémentaires ou les ferro-alliages, de préférence choisis parmi Ti, Ni, Fe, Si, Mn, Cr, Cu, V, Nb, Mo, B, W et Co.

6. Procédé selon l'une des revendications précédentes, **caractérisé en ce que** les éléments non métalliques formant les seconds éléments de remplissage sont choisis parmi TiO₂, Al₂O₃, SiO₂, MgO, KAlSi₃O₈, CaF2, Na₂SO4 et CaCO₃.

7. Procédé selon l'une des revendications précédentes, **caractérisé en ce que** les éléments non métalliques forment une couche protectrice continue au dessus de la sous-couche contenant les éléments métalliques, de préférence une couche ayant une épaisseur comprise entre 0.1 mm et 10 mm, de préférence comprise entre 0.2 mm et 6 mm.

8. Procédé selon l'une des revendications précédentes, **caractérisé en ce que** la quantité massique de la couche protectrice supérieure d'éléments non métalliques représente de 25% à 85% de la totalité des éléments de remplissage lorsque le fil contient du laitier ou moins de 10 % de la totalité des éléments de remplissage lorsque le fil est de type sans laitier.

9. Procédé selon l'une des revendications précédentes, **caractérisé en ce que** les bords longitudinaux de la bande métallique sont chanfreinés et comportent un angle de chanfreinage inférieur à 73°.

10. Procédé selon l'une des revendications précédentes, **caractérisé en ce que** les étapes a) à e) sont réalisées de manière progressive et continue, la bande métallique étant animée d'un mouvement de translation.

11. Procédé selon l'une des revendications précédentes, **caractérisé en ce que** la bande métallique constituant l'enveloppe du fil est en acier C-Mn, acier inoxydable, alliage de nickel de type Inconel ou en acier allié.

12. Procédé selon l'une des revendications précédentes, **caractérisé en ce que** la pénétration de la soudure de l'étape e) est comprise entre 40% et 100% de l'épaisseur de la bande métallique, de préférence l'épaisseur de la bande métallique est inférieure à 4,5 mm.

13. Procédé selon l'une des revendications précédentes, **caractérisé en ce que** le faisceau laser (10) vient frapper le pré-tube selon un angle (γ) compris entre 35 et 90° par rapport à l'axe longitudinal du pré-tube (1), de préférence compris entre 40 et 90°.

14. Procédé selon l'une des revendications précédentes, **caractérisé en ce que** le fil soudé obtenu à l'étape e) ou à l'issue d'au moins une étape f) est un fil fourré étanche comprenant une enveloppe métallique externe soudée et un flux interne formé d'éléments de remplissage.

15. Fil fourré étanche comprenant une enveloppe métallique externe soudée et un flux interne formé d'éléments de remplissage obtenu par un procédé de fabrication selon l'une des revendications précédentes, **caractérisé en ce que** le flux interne comprend au moins deux couche d'éléments de remplissage superposées l'une à l'autre, l'une des couches contenant exclusivement des éléments non métalliques et l'autre couche contenant des éléments métalliques.

## Patentansprüche

1. Verfahren zur Herstellung eines dichten Fülldrahtes aus einem Metallstreifen und Füllelementen, umfassend die Schritte des:
a) Bereitstellens eines Metallstreifens mit zwei parallelen Längskanten,
b) Ausbildens des Metallstreifens als eine Rinne ("U"-förmiger Querschnitt) durch Annähern seiner Längskanten,
c) Füllens der Rinne, die in Schritt b) erhalten wird, mit Füllelementen,
d) Ausbildens der Rinne, die mit Füllelementen gefüllt wird, die in Schritt c) erhalten wird, als einen röhrenförmigen Vordraht ("O"-förmiger Querschnitt) durch Annähern ihrer Längskanten bis diese miteinander einen Kontakt oder Quasi-Kontakt hergestellt haben und
e) Laserstrahlschweißens der zwei Längskanten des Vordrahtes des Schrittes d), um einen dichten geschweißten Draht zu erhalten, der die Füllelemente enthält,
**dadurch gekennzeichnet, dass** in dem Schritt c) nach den folgenden Unterschritten vorgegangen wird:
i) Einführen der ersten Füllelemente, die metallische Elemente enthalten, in die Rinne, derart, um eine Unterschicht zu bilden, die die metallischen Elemente enthält,
ii) Aufbringen über der Unterschicht, die die metallischen Elemente enthält, von mindestens einer Schutzschicht von zweiten Füllelementen, die im Wesentlichen nichtmetallische Elemente enthält.

2. Verfahren nach dem vorhergehenden Anspruch, **dadurch gekennzeichnet, dass** die Menge an nichtmetallischen Elementen der Schutzschicht von zweiten Füllelementen mindestens 90 Ma.-%, vorzugsweise mindestens 95 Ma.-% der Gesamtheit der zweiten Füllelemente der Schutzschicht darstellt.

3. Verfahren nach einem der vorhergehenden Ansprüche, **dadurch gekennzeichnet, dass** die ersten Füllelemente nur metallische Elemente enthalten oder aus einer Mischung von metallischen Elementen und nichtmetallischen Elementen gebildet sind.

4. Verfahren nach einem der vorhergehenden Ansprüche, **dadurch gekennzeichnet, dass** die zweiten Füllelemente nur nichtmetallische Elemente enthalten.

5. Verfahren nach einem der vorhergehenden Ansprüche, **dadurch gekennzeichnet, dass** die metallischen Elemente, die die ersten Füllelemente bilden, ausgewählt sind aus elementaren Metallen oder Ferrolegierungen, vorzugsweise ausgewählt aus Ti, Ni, F, Si, Mn, Cr, Cu, V, Nb, Mo, B, W und Co.

6. Verfahren nach einem der vorhergehenden Ansprüche, **dadurch gekennzeichnet, dass** die nichtmetallischen Elemente, die die zweiten Füllelemente bilden, ausgewählt sind aus TiO₂, Al₂O₃, SiO₂, MgO, KAlSi₃O₈, CaF2, Na₂SO₄ und CaCO₃.

7. Verfahren nach einem der vorhergehenden Ansprüche, **dadurch gekennzeichnet, dass** die nichtmetallischen Elemente über der Unterschicht, die die metallischen Elemente enthält, eine kontinuierliche Schutzschicht bilden, vorzugsweise eine Schicht, die eine Dicke aufweist, die zwischen 0,1 mm und 10 mm beträgt, vorzugsweise zwischen 0,2 mm und 6 mm beträgt.

8. Verfahren nach einem der vorhergehenden Ansprüche, **dadurch gekennzeichnet, dass** die Massenmenge der oberen Schutzschicht aus nichtmetallischen Elementen von 25 % bis 85 % der Gesamtheit der Füllelemente, wenn der Draht Schlacke enthält, oder weniger als 10 % der Gesamtheit der Füllelemente ausmacht, wenn der Draht des Typs ohne Schlacke ist.

9. Verfahren nach einem der vorhergehenden Ansprüche, **dadurch gekennzeichnet, dass** die Längskanten des Metallstreifens abgeschrägt sind und einen Abschrägungswinkel von weniger als 73° aufweisen.

10. Verfahren nach einem der vorhergehenden Ansprüche, **dadurch gekennzeichnet, dass** die Schritte a) bis e) progressiv und kontinuierlich durchgeführt werden, wobei der Metallstreifen in eine Translationsbewegung versetzt wird.

11. Verfahren nach einem der vorhergehenden Ansprüche, **dadurch gekennzeichnet, dass** der Metallstreifen, der die Drahthülle bildet, aus C-Mn-Stahl, rostfreiem Stahl, Nickellegierung des Typs Inconel oder Legierungsstahl ist.

12. Verfahren nach einem der vorhergehenden Ansprüche, **dadurch gekennzeichnet, dass** das Eindringen der Schweißung des Schritt e) zwischen 40 % und 100 % der Dicke des Metallstreifens beträgt, vorzugsweise liegt die Dicke des Metallstreifens unter 4,5 mm.

13. Verfahren nach einem der vorhergehenden Ansprüche, **dadurch gekennzeichnet, dass** der Laserstrahl (10) unter einem Winkel (γ) zwischen 35 und 90° in Bezug auf die Längsachse des Vorrohrs (1), vorzugsweise zwischen 40 und 90°, auf das Vorrohr auftrifft.

14. Verfahren nach einem der vorhergehenden Ansprüche, **dadurch gekennzeichnet, dass** der geschweißte Draht, der in Schritt e) oder am Ende von mindestens einem Schritt f) erhalten wird, ein dichter Fülldraht ist, der eine geschweißte äußere Metallhülle und ein inneres Flussmittel aufweist, das aus Füllelementen gebildet wird.

15. Dichter Fülldraht, umfassend eine geschweißte äußere Metallhülle und ein inneres Flussmittel, das aus Füllelemente gebildet ist, die durch ein Herstellungsverfahren nach einem der vorhergehenden Ansprüche erhalten werden, **dadurch gekennzeichnet, dass** das innere Flussmittel mindestens zwei Schichten von Füllelementen umfasst, die einander überlagert sind, wobei eine der Schichten ausschließlich nichtmetallische Elemente enthält und die andere Schicht metallische Elemente enthält.

## Claims

1. A method for manufacturing a sealed cored wire from a metal strip and filling elements, comprising the following steps:
a) providing a metal strip having two parallel longitudinal edges,
b) shaping the metal strip into a groove ("U" section) by bringing the longitudinal edges of the strip towards one another,
c) filling the groove obtained in step b) with filling elements,
d) shaping the groove filled with filling elements obtained in step c) into a preliminary tubular wire ("O" section) by bringing the longitudinal edges of the strip towards one another until they contact or quasi contact one another, and
e) soldering the two longitudinal edges of the preliminary wire from step d) by laser beam in order to obtain a sealed welded wire containing filling elements,
**characterised in that**, in step c), the following successive steps are performed:
i) introducing first filling elements containing metal elements into the groove so as to form a sub-layer containing said metal elements,
ii) depositing, on top of the sub-layer containing said metal elements, at least one protective layer of second filling elements containing substantially non-metal elements.

2. The method according to the preceding claim, **characterised in that** the amount of non-metal elements of the protective layer of second filling elements represents at least 90 mass %, preferably at least 95 mass % of the totality of second filling elements of said protective layer.

3. The method according to either one of the preceding claims, **characterised in that** the first filling elements contain solely metal elements or are formed of a mixture of metal elements and non-metal elements.

4. The method according to any one of the preceding claims, **characterised in that** the second filling elements contain solely non-metal elements.

5. The method according to any one of the preceding claims, **characterised in that** the metal elements forming the first filling elements are selected from the elemental metals or ferro-alloys, preferably selected from Ti, Ni, Fe, Si, Mn, Cr, Cu, V, Nb, Mo, B, W and Co.

6. The method according to any one of the preceding claims, **characterised in that** the non-metal elements forming the second filling elements are selected from TiO₂, Al₂O₃, SiO₂, MgO, KAlSi₃O₈, CaF₂, Na₂SO4 and CaCO₃.

7. The method according to any one of the preceding claims, **characterised in that** the non-metal elements form a continuous protective layer on top of the sub-layer containing the metal elements, preferably a layer having a thickness between 0.1 mm and 10 mm, preferably between 0.2 mm and 6 mm.

8. The method according to any one of the preceding claims, **characterised in that** the amount by mass of the upper protective layer of non-metal elements represents from 25% to 85% of the totality of the filling elements when the wire contains slag or less than 10% of the totality of filling elements when the wire is of the kind without slag.

9. The method according to any one of the preceding claims, **characterised in that** the longitudinal edges of the metal strip are chamfered and have a chamfer angle less than 73°.

10. The method according to any one of the preceding claims, **characterised in that** steps a) to e) are performed progressively and continuously, the metal strip being advanced by means of a movement in translation.

11. The method according to any one of the preceding claims, **characterised in that** the metal strip forming the sheath of the wire is made of C-Mn steel, stainless steel, nickel alloy of the Inconel type, or alloyed steel.

12. The method according to any one of the preceding claims, **characterised in that** the penetration of the solder in step e) is between 40% and 100% of the thickness of the metal strip, the thickness of the metal strip preferably being less than 4.5 mm.

13. The method according to any one of the preceding claims, **characterised in that** the laser beam (10) impinges on the preliminary tube at an angle (γ) between 35 and 90° relative to the longitudinal axis of the preliminary tube (1), preferably between 40 and 90°.

14. The method according to any one of the preceding claims, **characterised in that** the soldered wire obtained in step e) or at the end of at least one step f) is a sealed cored wire having a soldered outer metal sheath and an inner flux formed of filling elements.

15. Sealed cored wire having a soldered outer metal sheath and an inner flux formed of filling elements obtained by a production method according to any one of the preceding claims, **characterised in that** the inner flux has at least two layers of filling elements superimposed one on the other, one of the layers containing solely non-metal elements and the other layer containing metal elements.
